# EUROPÄISCHE PATENTSCHRIFT

(11) **EP 4 000 165 B1**
(45) Veröffentlichungstag und Bekanntmachung des Hinweises auf die Patenterteilung: **06.08.2025**
(21) Anmeldenummer: 20735055.4
(22) Anmeldetag: 23.06.2020
(51) Int. Cl.: H02K 5/22, H02K 11/28, H02K 11/33, H02K 5/18

(54) **ANTRIEB, AUFWEISEND EINEN ELEKTROMOTOR, EINEN UMRICHTER UND EIN ZWISCHEN DEM ELEKTROMOTOR UND UMRICHTER ANGEORDNETES ZWISCHENTEIL**
DRIVE HAVING AN ELECTRIC MOTOR, A CONVERTER AND AN INTERMEDIATE PART ARRANGED BETWEEN THE ELECTRIC MOTOR AND THE CONVERTER
ENTRAÎNEMENT PRÉSENTANT UN MOTEUR ÉLECTRIQUE, UN CONVERTISSEUR ET UNE PIÈCE INTERMÉDIAIRE DISPOSÉE ENTRE LE MOTEUR ÉLECTRIQUE ET LE CONVERTISSEUR

(30) Priorität: 18.07.2019 DE 102019004982
(43) Veröffentlichungstag der Anmeldung: 25.05.2022
(73) Patentinhaber: SEW-EURODRIVE GmbH & Co. KG, 76646 Bruchsal (DE)
(72) Erfinder: BRÖDNER, Johannes, 76698 Ubstadt-Weiher (DE); STARK, Tobias, 76669 Bad Schönborn (DE)
(86) Internationale Anmeldenummer: PCT/EP2020/025297
(87) Internationale Veröffentlichungsnummer: WO 2021/008723

(56) Entgegenhaltungen:
- EP-A1- 0 661 793
- DE-A1- 102005 037 488
- DE-A1- 102010 047 762
- US-A1- 2015 069 885
- US-B2- 8 324 770

## Beschreibung

Die Erfindung betrifft einen Antrieb, aufweisend einen Elektromotor, einen Umrichter und ein zwischen dem Elektromotor und Umrichter angeordnetes Zwischenteil.

Es ist allgemein bekannt, dass ein von einem Umrichter gespeister Elektromotor drehzahlregelbar ist.

Aus der DE 94 15 933 U1 ist ein frequenzumrichtergespeistes Pumpenaggregat bekannt.

Aus der DE 10 2017 220 970 A1 ist ein Elektromotor mit aufgesetztem Umrichter bekannt.

Aus der DE 10 2013 205 897 A1 ist ein Umrichtermotor bekannt.

Aus der EP 2 607 707 A1 ist ein Spaltrohrmotor eines Pumpenaggregats bekannt.

Aus der DE 103 61 748 A1 ist ein Kompaktantrieb bekannt.

Aus der DE 10 2005 032 969 A1 ist ein Umrichtermotor bekannt.

Aus der DE 10 2007 034 913 A1 ist ein Umrichtermotor mit Lüfterhaube bekannt.

Aus der EP 0 661 793 A1 ist als nächstliegender Stand der Technik eine Motorpumpenanordnung bekannt.

Aus der US 2015 / 069885 A1 ist eine Motoranordnung mit integrierten Kühlmitteln bekannt.

Aus der DE 10 2005 037488 A1 sit ein Gerät mit Leistungselektronik und Kühlkörpern bekannt.

Aus der DE 10 2010 0477762 A1 ist ein Umrichtermotor bekannt.

Aus der US 8 324 770 B2 ist ein Elektromotor bekannt.

Der Erfindung liegt daher die Aufgabe zugrunde, einen Antrieb effizienter weiterzubilden.

Erfindungsgemäß wird die Aufgabe bei dem Antrieb nach den in Anspruch 1 angegebenen Merkmalen gelöst.

Wichtige Merkmale der Erfindung bei dem Antrieb sind, dass der Antrieb einen Elektromotor, einen Umrichter und ein zwischen dem Elektromotor und Umrichter angeordnetes Zwischenteil aufweist,
wobei ein Unterteil mit dem Zwischenteil wärmeleitend verbunden ist,
wobei ein vom Zwischenteil beabstandetes Oberteil mit dem Unterteil wärmeleitend verbunden ist,
wobei das Oberteil Kühlrippen aufweist. Von Vorteil ist dabei, dass die Wärme vom Zwischenteil herausleitbar ist bis zum Oberteil, welches Kühlrippen aufweist, so dass die Wärme an die Umgebung abführbar ist.

Bei einer vorteilhaften Ausgestaltung ist der Elektromotor vom Umrichter beabstandet, wobei das Zwischenteil sowohl mit dem Elektromotor, insbesondere mit dem Statorgehäuse des Elektromotors, als auch mit dem Umrichter, insbesondere mit dem Gehäuse des Umrichters, verbunden ist. Von Vorteil ist dabei, dass im Zwischenteil Anschlusselemente anordenbar sind, wie beispielsweise ein Klemmenbrett, auf welchem die Statorleitungen des Stators des Elektromotors aufgelegt und mit Kontakten eines Steckverbinderteils verbunden sind, dessen entsprechendes Gegensteckverbinderteil am Umrichter angeordnet ist, so dass der Umrichter den Elektromotor speist. Die Versorgungsleitungen des Umrichters hingegen sind an Kontakte des Gegensteckverbinderteils führbar, wobei die Leitungen eines Kabels mit Kontakten des Steckverbinderteils verbunden sind, welche mit Leitungen eines Kabels verbunden sind, das durch eines der Schraubteile geführt ist. Somit ist das Kabel zu einem in dem Unterteil angeordneten Trennschalter führbar, der die elektrische Versorgung zum Wechselspannungsversorgungsnetz, insbesondere Drehstromnetz hin, auftrennbar macht.

Erfindungsgemäß weist das Zwischenteil durchgehende, insbesondere durch eine Wand des Zwischenteils durchgehende, Gewindebohrungen auf,

in welche Schraubteile eingeschraubt sind, die, insbesondere deren verbreiterte Bereiche, das Unterteil zum Zwischenteil hindrücken,
insbesondere wobei die Gewindebohrungen vom Unterteil zusammen mit dem Oberteil abgedeckt sind. Von Vorteil ist dabei, dass mittels der Schraubteile einerseits ein kraftschlüssiges Verbinden des Unterteils mit dem Zwischenteil bewirkbar ist und andererseits durch das Schraubteil ein Kabel durchführbar ist.

Bei einer vorteilhaften Ausgestaltung ist am Unterteil ein Wulst ausgeformt,

insbesondere welcher das Zwischenteil berührt und/oder die zum Unterteil hin gewandten Mündungsöffnungen der Gewindebohrungen umgibt. Von Vorteil ist dabei, dass in einfacher Weise eine Dichtung zwischen Zwischenteil und Unterteil anordenbar ist, welche bis zum berührenden Anliegen des Wulstes an dem Zwischenteil elastisch auslenkbar ist. Somit ist eine dichte Verbindung bewirkbar und die Gewindebohrungen schützbar.

Bei einer vorteilhaften Ausgestaltung ist das Unterteil vom Umrichter beabstandet,
wobei das Unterteil vom Elektromotor beabstandet ist,
wobei das Oberteil vom Umrichter beabstandet ist,
wobei das Oberteil vom Elektromotor beabstandet ist. Von Vorteil ist dabei, dass die Wärme herausleitbar ist vom Zwischenteil über das Unterteil zum Oberteil hin. Dabei stören die beabstandeten weiteren Wärmequellen, also Elektromotor und Umrichter, nicht.

Bei einer vorteilhaften Ausgestaltung ist zwischen dem Zwischenteil und dem Unterteil eine Dichtung, insbesondere Flachdichtung angeordnet, welche bezogen auf die Bohrungsachse einer der Gewindebohrungen radial außerhalb des Wulstes angeordnet ist und/oder den Wulst umlaufend ausgebildet ist,

insbesondere wobei die elastische Verformung der Dichtung mittels des an dem Zwischenteil anliegenden Wulstes begrenzt ist. Von Vorteil ist dabei, dass der Wulst eine definierte Auslenkung der Dichtung ermöglicht.

Erfindungsgemäß weist das jeweilige, insbesondere jedes Schraubteil ein mittig durch das Schraubteil, insbesondere in Richtung der Bohrungsachse der Gewindebohrung, durchgehendes Loch zur Durchführung eines Kabels vom Innenraum des Unterteils zum vom Zwischenteil umgebenen Innenraum auf. Von Vorteil ist dabei, dass ein jeweiliges Versorgungskabel durch ein jeweiliges Schraubteil durchführbar ist.

Erfindungsgemäß ragt das jeweilige Schraubteil durch eine jeweilige Ausnehmung, insbesondere durch eine Wand des Unterteils durchgehende Ausnehmung, des Unterteils hindurch,
wobei die Ausnehmung jeweils aus zwei kreisrunden überlappenden Löcher zusammengesetzt ist, insbesondere so, dass das Schraubteil in einer ersten Montageposition des Unterteils am Zwischenteil durch ein und in der anderen Montageposition durch das andere der beiden überlappenden Löcher hindurchragt. Von Vorteil ist dabei, dass die Ausnehmung derart symmetrisch ausgeführt ist, dass eine Montage des Unterteils an einer gegenüberliegenden Wand des Zwischenteils ermöglicht ist, wobei das Unterteil 180° gedreht ist.

Bei einer vorteilhaften Ausgestaltung weist die Wand des Zwischenteils durchgehende Gewindebohrungen nicht nur an der dem Unterteil zugewandten Seite auf, sondern auch gegenüberliegend auf, insbesondere also spiegelsymmetrisch zur die Drehachse des Rotors enthaltenden Ebene,
- welche parallel zu der den eben ausgebildeten Berührbereich zwischen dem Wulst und dem Zwischenteil enthaltenden Ebene ausgerichtet ist
- oder welche senkrecht zu einer Ebene ist, die senkrecht zu der den eben ausgebildeten Berührbereich zwischen dem Wulst und dem Zwischenteil enthaltenden Ebene ist und senkrecht zu der den eben ausgebildeten Berührbereich zwischen Oberteil und Unterteil enthaltenden Ebene ist,
- oder welche senkrecht zu einer Ebene ist, die senkrecht zu der den eben ausgebildeten Berührbereich zwischen dem Wulst und dem Zwischenteil enthaltenden Ebene ist und senkrecht zu der eine zwischen Unterteil und Oberteil zwischengeordnete Dichtung enthaltenden Ebene ist,
insbesondere so, dass das Unterteil nicht nur in einer ersten Montageposition am Unterteil verbindbar ist, sondern auch gegenüberliegend an einer zweiten Montageposition. Von Vorteil ist dabei, dass das Unterteil an zwei Montagepositionen montierbar ist. Somit ist eine doppelte Anzahl von Varianten erzeugbar bei gleicher Anzahl von Teilen.

Bei einer vorteilhaften Ausgestaltung ist ein Bremswiderstand im Zwischenteil aufgenommen und mit dem Zwischenteil wärmeleitend verbunden. Von Vorteil ist dabei, dass der Bremswiderstand geschützt im Inneren des Bremswiderstands anordenbar ist und die Wärme über das Zwischenteil und das Unterteil zum Oberteil weiterleitbar ist.

Bei einer vorteilhaften Ausgestaltung ist der Bremswiderstand an der Innenseite desjenigen Bereichs der Wand des Zwischenteils angeordnet und mit dem Zwischenteil wärmeleitend verbunden, an dessen Außenseite der Wulst anliegt, insbesondere zur wärmeleitenden Verbindung des Unterteils mit dem Zwischenteil. Von Vorteil ist dabei, dass die Wärme des Bremswiderstandes direkt abführbar ist ans Unterteil.

Bei einer vorteilhaften Ausgestaltung sind die die Schraubteile aufnehmenden Gewindebohrungen innerhalb des Bereichs angeordnet. Von Vorteil ist dabei, dass die Wärmeleitung nicht nur über den Wulst, sondern auch über das Schraubteil durchführbar ist.

Bei einer vorteilhaften Ausgestaltung sind die Schraubteile, das Zwischenteil, das Unterteil und das Oberteil aus Metall gefertigt und somit führt ein erster Wärmeleitpfad vom Bremswiderstand über das Zwischenteil, die Schraubteile zum Unterteil und dann zum Oberteil.
und ein zweiter Wärmeleitpfad vom Bremswiderstand über das Zwischenteil zum Wulst des Unterteils und dann vom Unterteil zum Oberteil führt. Von Vorteil ist dabei, dass eine verbesserte Wärmeleitung ermöglicht ist.

Bei einer vorteilhaften Ausgestaltung ist zwischen Oberteil und Unterteil eine weitere Dichtung angeordnet ist, welche von einem am Oberteil hervorragenden Bereich radial umgeben ist,
wobei der hervorragende Bereich direkt am Unterteil anliegt und dieses berührt,
insbesondere wobei das Oberteil mit dem Unterteil mittels Verbindungsschrauben verbunden ist, so dass der hervorragende Bereich des Oberteils ans Unterteil gedrückt ist. Von Vorteil ist dabei, dass auch das Unterteil am Oberteil direkt berührend angeordnet ist.

Bei einer vorteilhaften Ausgestaltung ist der Berührbereich zwischen Unterteil und Oberteil, insbesondere der Berührbereich zwischen Unterteil und dem am Oberteil hervorragenden Bereich, eben ausgebildet und die Normale der den Berührbereich umfassenden Ebene zur Bohrungsachse der jeweiligen Gewindebohrung einen Winkel zwischen 20° und 70° aufweist. Von Vorteil ist dabei, dass eine bessere Montage ermöglicht ist, indem bei abgehobenem Oberteil die elektrischen Verbindungen in einfacher Weise erzeugt werden.

Bei einer vorteilhaften Ausgestaltung ist das Unterteil als Gussteil mit zwei in einer Ziehrichtung relativ voneinander weg bewegten Stempelteilen gefertigt,
wobei die Ziehrichtung parallel zur Normalen der den Berührbereich, insbesondere zwischen Unterteil und Oberteil, umfassenden Ebene ausgerichtet ist,
insbesondere wobei ein erstes der beiden Stempelteile einen ersten Bereich der aus zwei kreisrunden überlappenden Löcher zusammengesetzten Ausnehmung entformt und ein zweites der beiden Stempelteile einen zweiten Bereich der aus zwei kreisrunden überlappenden Löcher zusammengesetzten Ausnehmung entformt. Von Vorteil ist dabei, dass die Stempelteile derart geformt sind, dass die Berandung parallel zur Bohrungsachse der Gewindebohrungen ausgerichtet sind. Allerdings ist die Ziehrichtung nicht parallel zur Bohrungsachse und somit auch nicht zur Berandung.

Weitere Vorteile ergeben sich aus den Unteransprüchen.

Die Erfindung wird nun anhand von schematischen Abbildungen näher erläutert:

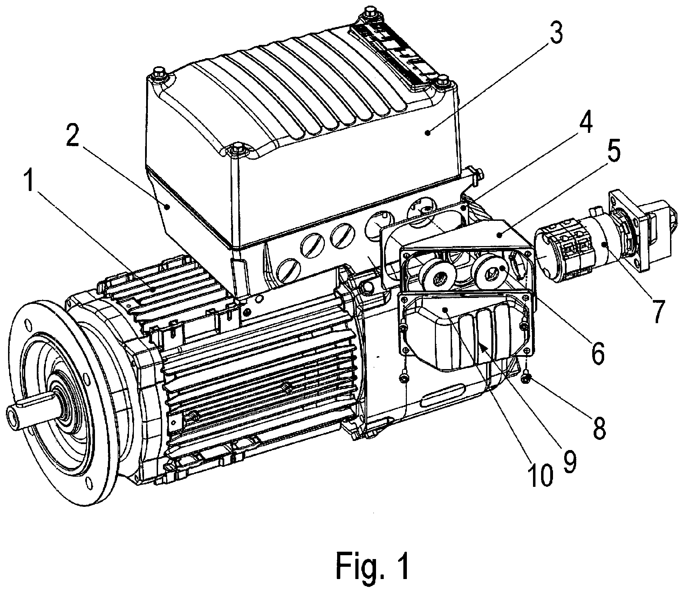

In der Figur 1 ist ein erfindungsgemäßer Antrieb mit einem Zwischenteil 2 in Explosionsdarstellung gezeigt, dass zwischen einem Umrichter 3 und einem Elektromotor 1 angeordnet ist, wobei ein Schalter 7, insbesondere Trennschalter, am Zwischenteil 2 angeordnet ist.

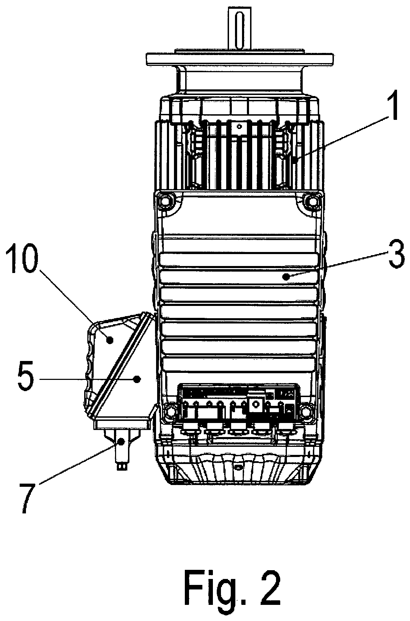

In der Figur 2 ist eine Draufsicht auf den Antrieb dargestellt.

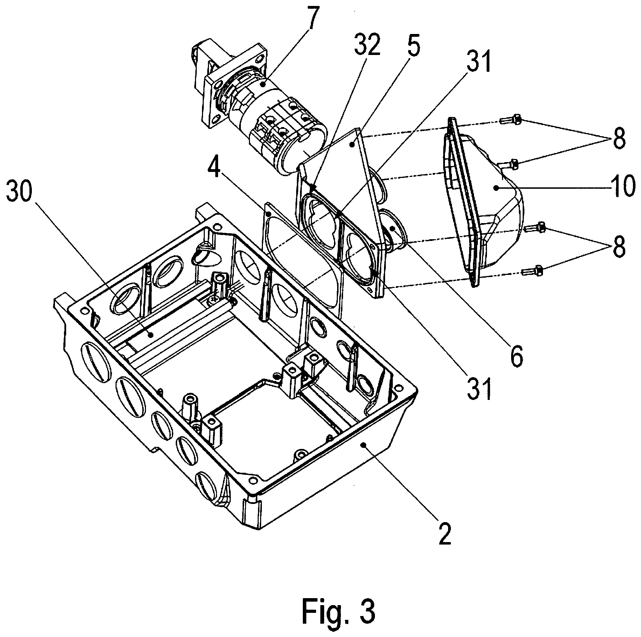

In der Figur 3 ist das Rahmenteil 2 mit dem Schalter 7 explodiert dargestellt, der mittels eines auf einem Unterteil 5 aufgesetzten Oberteils 10 am Rahmenteil 2 angeordnet ist.

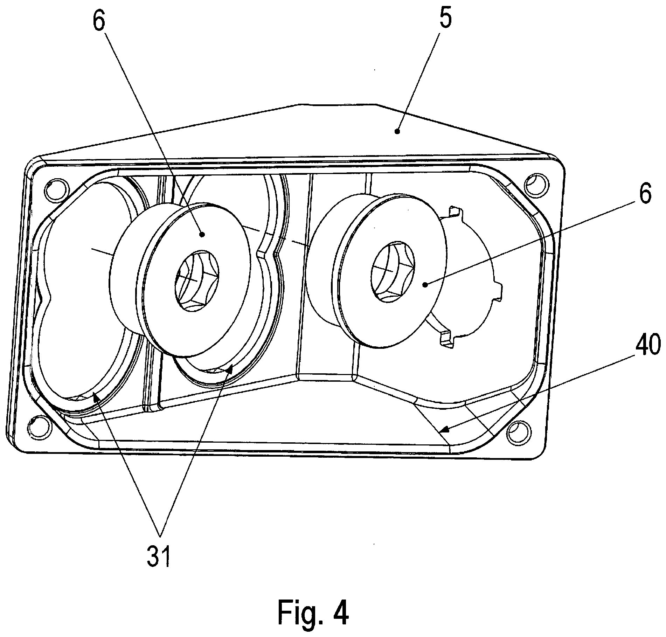

In der Figur 4 ist das Unterteil 5 mit zwei zugehörigen Schraubteilen 6 in Schrägansicht dargestellt.

Wie in den Figuren gezeigt, weist der Antrieb einen Elektromotor 1 auf, der von einem Umrichter 3 gespeist wird. Dieser Umrichter ist aus einem elektrischen Wechselspannungsversorgungsnetz, insbesondere Drehstromnetz, versorgbar, wobei ein Schalter 7 zum Trennen des Umrichters 3 vom Wechselspannungsversorgungsnetz in einem Unterteil 5 angeordnet ist.

Auf das Unterteil ist ein Oberteil aufsetzbar und mit schrauben 8 verbindbar.

Das Unterteil 5 ist ans Zwischenteil 2 angeklemmt, indem Schraubteile 6 in Gewindebohrungen des Zwischenteils 2 eingeschraubt sind, welche durchgehend ausgeführt sind, also durch die Wand des Zwischenteils 2 durchgehen und/oder durchführen. Zum Anklemmen des Unterteils 5 weisen die Schraubteile 6 jeweils verbreiterte axiale Endbereiche auf, welche auf die Wand des Unterteils 5 drücken. Auf seiner dem Zwischenteil 2 zugewandten Seite weist das Unterteil 5 einen hervorragenden Wulst 32 auf, welcher um für die Schraubteile 6 am Unterteil 5 ausgeformten und durch die Wand des Unterteils 5 durchgehenden Ausnehmungen umlaufend ausgeformt ist.

Durch eine weitere Ausnehmung des Unterteils ragt ein Schalter 7 hindurch, der als Trennschalter ausgebildet ist, also zum Trennen der Netzversorgung des Umrichters 3 vom Umrichter. Zwischen dem Unterteil 5 und dem Zwischenteil 2 ist eine Dichtung, insbesondere Flachdichtung, angeordnet, welche beim Andrücken des Unterteils 5 mittel der Schraubteile 6
elastisch verformt wird. Dabei liegt der Wulst 32 direkt am Zwischenteil 2 an, so dass die elastische Verformung auf diese Weise begrenzt ist mittels des Wulstes 32.

Die Dichtung 4 ist radial außerhalb des Wulstes 32 angeordnet und wird beim Andrücken des Unterteils 5 mittels der Schraubteile 6 nur so weit verformt, bis der Wulst 32 direkt am Zwischenteil 2 anliegt.

Auf das Unterteil 5 ist ein Oberteil 9 aufgesetzt, welches insbesondere an seiner vom Unterteil 5 abgewandten Seite Kühlrippen 9 aufweist. Das Oberteil 10 ist mittels Schrauben 8 mit dem Unterteil 5 verbunden.

Zwischen Oberteil 9 und Unterteil 5 ist ebenfalls eine Dichtung angeordnet, die wiederum elastisch verformt ist, bis ein am Oberteil 9 hervorstehender Bereich am Unterteil 5 anliegt. Somit ist auch hierbei eine Verformung der Dichtung begrenzt.

Die beiden Schraubteile 6 weisen jeweils eine mittig durch sie hindurchgehende Ausnehmung auf, durch welche jeweils ein Kabel geführt ist.

Das Zwischenteil 2, das Unterteil 5 und das Oberteil 10 sind aus Metall, insbesondere Aluminium, ausgeführt.

Somit sind diese Teile gut wärmeleitend miteinander verbunden.

Der Umrichter 3 weist einen Deckel auf, welcher Kühlrippen aufweist und somit die Leistungselektronik des Umrichters 3 entwärmt. Der Elektromotor 1 weist ein Statorgehäuse auf, welches ebenfalls Kühlrippen aufweist zur Erwärmung der Statorwicklungen des Elektromotors.

Im Zwischenteil 2 ist ein Bremswiderstand 30 angeordnet, der zur Umwandlung überschüssiger Energie, welche im generatorischen Betrieb des Elektromotors 1 erzeugt wird, in Wärmeenergie vorgesehen ist.

Dieser Bremswiderstand 30 ist im Zwischenteil 2 angeordnet und wärmeleitend mit einem Bereich des Zwischenteils 2 verbunden. Somit wird die vom Bremswiderstand 30 erzeugte Wärme im Wesentlichen an das Zwischenteil 2 abgeführt. Allerdings weist das Zwischenteil 2
keine Kühlrippen auf und ist dadurch nur zu einem geringen Teil in der Lage, die erzeugte Wärme an die Umgebung abzuführen.

Da jedoch der Bremswiderstand an der Innenseite desjenigen Bereichs des Zwischenteils 2 angeordnet ist, an dessen Außenseite der Wulst 32 am Zwischenteil 2 anliegt, wird ein großer Anteil des vom Bremswiderstand 30 erzeugten Wärmestroms an das Unterteil 5 abgeführt. Über das Unterteil 5 strömt ein Anteil des Wärmstroms weiter zum Oberteil 10 und wird dann von dessen Kühlrippen 9 an die Umgebung abgegeben. Die Kühlrippen vergrößern die Oberfläche des Oberteils 10. Der Wärmeübergangswiderstand vom Oberteil zur Umgebungsluft ist somit sehr gering.

Somit fungiert das durch das Unterteil 5 und das Oberteil 10 gebildete Gehäuse nicht nur als Gehäuse des Schalters 7, sondern auch als Kühlkörper für den Bremswiderstand 30.

Die Wand des Zwischenteils 2 weist durchgehenden Gewindebohrungen nicht nur an der dem Unterteil 5 zugewandten Seite auf, sondern auch gegenüberliegend, insbesondere also spiegelsymmetrisch zur die Drehachse des Rotors enthaltenden Ebene, welche parallel zu der den eben ausgebildeten Berührbereich zwischen dem Wulst 32 und dem Zwischenteil 2 enthaltenden Ebene ausgerichtet ist.

Somit ist die Montage des Unterteils 5 am Zwischenteil 2 in zwei zueinander spiegelsymmetrisch angeordneten Ausrichtungen ermöglicht.

Wegen der am Unterteil 5 ausgeführten Schrägung muss das Unterteil um 180° gedreht in der jeweils anderen Ausrichtung montierbar sein.

Da das Schraubteil 6 unsymmetrisch innerhalb des Unterteils 5 angeordnet ist, insbesondere näher an der Oberseite als an der Unterseite, ist die Ausnehmung des Unterteils 5, durch welche das Schraubteil 6 hindurchragt nicht kreisförmig, sondern einer Acht entsprechend ausgeformt.

Hierbei ist also die Ausnehmung jeweils aus zwei kreisrunden überlappenden Löcher zusammengesetzt, wobei das Schraubteil 6 in der ersten Montageposition des Unterteils 5 am Zwischenteil 2 durch ein und in der anderen Montageposition durch das andere der beiden überlappenden Löcher hindurchragt.

Das Unterteil 5 ist als Gussteil hergestellt, wobei beim Gießvorgang Stempelteile in einer Ziehrichtung auseinandergezogen werden. Diese Ziehrichtung ist in Normalenrichtung zu der die Dichtung zwischen Unterteil 5 und Oberteil 10 aufnehmenden und/oder den Berührbereich zwischen Unterteil 5 und Oberteil 10 aufnehmenden Ebene ausgerichtet.

Durch die zum ebenen Berührbereich zwischen Zwischenteil 2 und Wulst 32 des Unterteils 5 geneigte, den Berührbereich zwischen Unterteil 5 und Oberteil 10 aufnehmenden Ebene ist das Unterteil 5 zu Servicezwecken besser zugänglich.

Die Wandung, insbesondere also der Rand, der aus den beiden Löchern zusammengesetzten Ausnehmung ist überall parallel zu den Bohrungsachsen der Gewindebohrungen des Zwischenteils 2. Insbesondere gleicht die Ausdehnung der senkrechten, auf die Bohrungsachse gerichteten Projektion der Wandung der Ausdehnung der Wandung in Richtung der Bohrungsachse der Gewindebohrung.

Die Wandung wird bei der Gussherstellung beim Auseinanderziehen der Stempelteile erzeugt. Dabei ist ein erster Bereich der Wandung vom ersten Stempelteil und ein zweiter Bereich der Wandung vom zweiten Stempelteil geformt.

Die Ziehrichtung ist parallel zur Normalenrichtung der den Berührbereich zwischen Zwischenteil 2 und Wulst 32 aufnehmenden Ebene ausgerichtet. Entsprechend der Ziehrichtung sind an der Innenwandung des Unterteils 5 Riefen und/oder Rillen im mikroskopisch beobachtbaren Bereich erkennbar.

Das erste Stempelteil erzeugt beim Auseinanderziehen der beiden Stempelteile die Wandung, insbesondere den Rand, der aus den beiden Löchern zusammengesetzten Ausnehmung.

Hierzu weisen die beiden Stempelteile zur Ziehrichtung entsprechend geneigte Oberflächenbereiche auf, die zu Beginn des Auseinanderziehens sofort abheben von der Wandung, insbesondere von dem Rand, der Ausnehmung.

Das Oberteil 10 ist ebenso durch Auseinanderziehen von zwei Stempelteilen hergestellt, wobei die Ziehrichtung wiederum einen Winkel zwischen 10° und 80° zur Berührfläche zwischen Unterteil 5 und Oberteil 10 aufweist.

Die zur die Berührfläche zwischen Wulst 32 und Zwischenteil 2 aufnehmende Ebene geneigte Ebene, welche die Berührfläche zwischen Unterteil 5 und Oberteil 10 aufnimmt, ermöglicht nach Abnehmen des Oberteils 10 vom Unterteil 5 eine einfache störungsfreie Betätigung beispielsweise der Schraubteile 6.

Bei weiteren erfindungsgemäßen Ausführungsbeispielen wird das Unterteil 5 ebenfalls mit Kühlrippen ausgeführt. Somit ist eine noch effizientere Entwärmung ermöglicht.

### Bezugszeichenliste

1 Elektromotor
2 Zwischenteil
3 Umrichter
4 Flachdichtung
5 Unterteil
6 Schraubteil
7 Schalter, insbesondere Trennschalter
8 Schraube
9 Kühlrippen
10 Oberteil
30 Bremswiderstand
31 Ausnehmung
32 umlaufender Wulst
40 Vertiefung, insbesondere Rille in Ziehrichtung

## Patentansprüche

1. Antrieb, aufweisend einen Elektromotor (1), einen Umrichter (3) und ein zwischen dem Elektromotor (1) und Umrichter (3) angeordnetes Zwischenteil (2), in welchem Anschlusselemente angeordnet sind,
wobei ein Unterteil (5) mit dem Zwischenteil (2) wärmeleitend verbunden ist,
wobei ein vom Zwischenteil (2) beabstandetes Oberteil (10) mit dem Unterteil (5) wärmeleitend verbunden ist,
wobei das Oberteil (10) Kühlrippen (9) aufweist,
**dadurch gekennzeichnet, dass**
im Unterteil (5) ein Trennschalter (7) angeordnet ist, das Zwischenteil (2) durchgehende, insbesondere durch eine Wand des Zwischenteils (2) durchgehende, Gewindebohrungen aufweist,
in welche Schraubteile (6) eingeschraubt sind, die, insbesondere deren verbreiterte Bereiche, das Unterteil (5) zum Zwischenteil (2) hindrücken, wobei das jeweilige Schraubteil (6) durch eine jeweilige Ausnehmung (31), insbesondere durch eine durch eine Wand des Unterteils (5) durchgehende Ausnehmung (31), des Unterteils (5) hindurchragt,
wobei die Ausnehmung (31) jeweils aus zwei kreisrunden einander überlappenden Löcher zusammengesetzt ist, so, dass das Schraubteil (6) in einer ersten Montageposition des Unterteils (5) am Zwischenteil (2) durch ein erstes und in der anderen Montageposition durch das andere der beiden überlappenden Löcher hindurchragt,
und wobei das jeweilige Schraubteil (6), insbesondere jedes Schraubteil (6), ein mittig durch das jeweilige Schraubteil (6), insbesondere in Richtung der Bohrungsachse der Gewindebohrung, durchgehendes Loch zur Durchführung eines Kabels vom Innenraum des Unterteils (5) zum vom Zwischenteil (2) umgebenen Innenraum aufweist.

2. Antrieb nach Anspruch 1,
**dadurch gekennzeichnet, dass**
der Elektromotor (1) vom Umrichter (3) beabstandet ist,
wobei das Zwischenteil (2) sowohl mit dem Elektromotor (1), insbesondere mit dem Statorgehäuse des Elektromotors (1), als auch mit dem Umrichter (3), insbesondere mit dem Gehäuse des Umrichters (3), verbunden ist.

3. Antrieb nach einem der vorangegangenen Ansprüche,
**dadurch gekennzeichnet, dass**
die Gewindebohrungen vom Unterteil (5) zusammen mit dem Oberteil (10) abgedeckt sind.

4. Antrieb nach einem der vorangegangenen Ansprüche,
**dadurch gekennzeichnet, dass**
am Unterteil (5) ein Wulst (32) ausgeformt ist,
insbesondere welcher das Zwischenteil (2) berührt und/oder die zum Unterteil (5) hin gewandten Mündungsöffnungen der Gewindebohrungen umgibt.

5. Antrieb nach einem der vorangegangenen Ansprüche,
**dadurch gekennzeichnet, dass**
das Unterteil (5) vom Umrichter (3) beabstandet ist,
wobei das Unterteil (5) vom Elektromotor (1) beabstandet ist,
wobei das Oberteil (10) vom Umrichter (3) beabstandet ist,
wobei das Oberteil (10) vom Elektromotor (1) beabstandet ist.

6. Antrieb nach einem der vorangegangenen Ansprüche,
**dadurch gekennzeichnet, dass**
zwischen dem Zwischenteil (2) und dem Unterteil (5) eine Dichtung, insbesondere Flachdichtung (4) angeordnet ist, welche bezogen auf die Bohrungsachse einer der Gewindebohrungen radial außerhalb des Wulstes (32) angeordnet ist und/oder den Wulst (32) umlaufend ausgebildet ist,
insbesondere wobei die elastische Verformung der Dichtung mittels des an dem Zwischenteil (2) anliegenden Wulstes (32) begrenzt ist.

7. Antrieb nach einem der vorangegangenen Ansprüche,
**dadurch gekennzeichnet, dass**
die Wand des Zwischenteils (2) durchgehende Gewindebohrungen nicht nur an der dem Unterteil (5) zugewandten Seite auf, sondern auch gegenüberliegend aufweist, insbesondere also spiegelsymmetrisch zur die Drehachse des Rotors enthaltenden Ebene,
- welche parallel zu der den eben ausgebildeten Berührbereich zwischen dem Wulst (32) und dem Zwischenteil (2) enthaltenden Ebene ausgerichtet ist
- oder welche senkrecht zu einer Ebene ist, die senkrecht zu der den eben ausgebildeten Berührbereich zwischen dem Wulst (32) und dem Zwischenteil (2) enthaltenden Ebene ist und senkrecht zu der den eben ausgebildeten Berührbereich zwischen Oberteil (10) und Unterteil (5) enthaltenden Ebene ist,
- oder welche senkrecht zu einer Ebene ist, die senkrecht zu der den eben ausgebildeten Berührbereich zwischen dem Wulst (32) und dem Zwischenteil (2) enthaltenden Ebene ist und senkrecht zu der eine zwischen Unterteil (5) und Oberteil (10) zwischengeordnete Dichtung enthaltenden Ebene ist,
insbesondere so, dass das Unterteil (5) nicht nur in einer ersten Montageposition am Unterteil (5) verbindbar ist sondern auch gegenüberliegend an einer zweiten Montageposition.

8. Antrieb nach einem der vorangegangenen Ansprüche,
**dadurch gekennzeichnet, dass**
ein Bremswiderstand (30) im Zwischenteil (2) aufgenommen und mit dem Zwischenteil (2) wärmeleitend verbunden ist.

9. Antrieb nach Anspruch 8,
**dadurch gekennzeichnet, dass**
der Bremswiderstand (30) an der Innenseite desjenigen Bereichs der Wand des Zwischenteils (2) angeordnet und mit dem Zwischenteil (2) wärmeleitend verbunden ist, an dessen Außenseite der Wulst (32) anliegt, insbesondere zur wärmeleitenden Verbindung des Unterteils (5) mit dem Zwischenteil (2).

10. Antrieb nach Anspruch 9,
**dadurch gekennzeichnet, dass**
die die Schraubteile (6) aufnehmenden Gewindebohrungen innerhalb des Bereichs angeordnet sind.

11. Antrieb nach einem der vorangegangenen Ansprüche,
**dadurch gekennzeichnet, dass**
die Schraubteile (6), das Zwischenteil (2), das Unterteil (5) und das Oberteil (10) aus Metall gefertigt sind und somit ein erster Wärmeleitpfad vom Bremswiderstand (30) über das Zwischenteil (2), die Schraubteile (6) zum Unterteil (5) und dann zum Oberteil (10) führt
und ein zweiter Wärmeleitpfad vom Bremswiderstand (30) über das Zwischenteil (2) zum Wulst (32) des Unterteils (5) und dann vom Unterteil (5) zum Oberteil (10) führt.

12. Antrieb nach einem der vorangegangenen Ansprüche,
**dadurch gekennzeichnet, dass**
zwischen Oberteil (10) und Unterteil (5) eine weitere Dichtung angeordnet ist, welche von einem am Oberteil (10) hervorragenden Bereich radial umgeben ist,
wobei der hervorragende Bereich direkt am Unterteil (5) anliegt und dieses berührt,
insbesondere wobei das Oberteil (10) mit dem Unterteil (5) mittels Verbindungsschrauben verbunden ist, so dass der hervorragende Bereich des Oberteils (10) ans Unterteil (5) gedrückt ist.

13. Antrieb nach einem der vorangegangenen Ansprüche,
**dadurch gekennzeichnet, dass**
der Berührbereich zwischen Unterteil (5) und Oberteil (10), insbesondere der Berührbereich zwischen Unterteil (5) und dem am Oberteil (10) hervorragenden Bereich, eben ausgebildet ist und die Normale der den Berührbereich umfassenden Ebene zur Bohrungsachse der jeweiligen Gewindebohrung einen Winkel zwischen 20° und 70° aufweist.

14. Antrieb nach einem der vorangegangenen Ansprüche,
**dadurch gekennzeichnet, dass**
das Unterteil (5) als Gussteil mit zwei in einer Ziehrichtung relativ voneinander weg bewegten Stempelteilen gefertigt ist,
wobei die Ziehrichtung parallel zur Normalen der den Berührbereich, insbesondere zwischen Unterteil (5) und Oberteil (10), umfassenden Ebene ausgerichtet ist,
insbesondere wobei ein erstes der beiden Stempelteile einen ersten Bereich der aus zwei kreisrunden überlappenden Löcher zusammengesetzten Ausnehmung (31) entformt und ein zweites der beiden Stempelteile einen zweiten Bereich der aus zwei kreisrunden überlappenden Löcher zusammengesetzten Ausnehmung (31) entformt.

## Claims

1. Drive comprising an electric motor (1), a converter (3) and an intermediate part (2) which is arranged between the electric motor (1) and the converter (3) and in which connection elements are arranged,
wherein a lower part (5) is connected to the intermediate part (2) in a heat-conducting manner,
wherein an upper part (10) spaced apart from the intermediate part (2) is connected to the lower part (5) in a heat-conducting manner,
wherein the upper part (10) has cooling ribs (9),
**characterised in that**
a disconnector (7) having threaded bores that pass through the intermediate part (2), in particular pass through a wall of the intermediate part (2), is arranged in the lower part (5), screw parts (6) being screwed into said threaded bores, which screw parts, in particular the enlarged regions thereof, press the lower part (5) towards the intermediate part (2), wherein each screw part (6) protrudes through a particular cut-out (31) in the lower part (5), in particular through a cut-out (31) passing through a wall of the lower part (5),
wherein each cut-out (31) is composed of two circular overlapping holes such that the screw part (6) protrudes through a first of the two overlapping holes when the lower part (5) is in a first mounting position on the intermediate part (2) and through the other of the two overlapping holes in the other mounting position,
and wherein the relevant screw part (6), in particular each screw part (6), has a hole passing centrally through the relevant screw part (6), in particular in the direction of the bore axis of the threaded bore, for leading through a cable from the internal space of the lower part (5) to the internal space enclosed by the intermediate part (2).

2. Drive according to claim 1,
**characterised in that**
the electric motor (1) is spaced apart from the converter (3), wherein the intermediate part (2) is connected both to the electric motor (1), in particular to the stator casing of the electric motor (1), and to the converter (3), in particular to the casing of the converter (3).

3. Drive according to any of the preceding claims,
**characterised in that**
the threaded bores are covered by the lower part (5) together with the upper part (10).

4. Drive according to any of the preceding claims,
**characterised in that**
a bead (32) is formed on the lower part (5)
and in particular is in contact with the intermediate part (2) and/or encloses the threaded-bore orifices facing towards the lower part (5).

5. Drive according to any of the preceding claims,
**characterised in that**
the lower part (5) is spaced apart from the converter (3),
wherein the lower part (5) is spaced apart from the electric motor (1),
wherein the upper part (10) is spaced apart from the converter (3),
wherein the upper part (10) is spaced apart from the electric motor (1).

6. Drive according to any of the preceding claims,
**characterised in that**
a seal, in particular a flat seal (4), is arranged between the intermediate part (2) and the lower part (5) and is arranged radially outside the bead (32) in relation to the bore axis of one of the threaded bores and/or is formed all around the bead (32),
in particular wherein the elastic deformation of the seal is limited by means of the bead (32) abutting the intermediate part (2).

7. Drive according to any of the preceding claims,
**characterised in that**
the wall of the intermediate part (2) has through-going threaded bores not only on the side facing the lower part (5) but also on the opposite side, i.e. in particular in mirror symmetry in relation to the plane containing the axis of rotation of the rotor,
- said plane being oriented in parallel with the plane that contains the planar contact region between the bead (32) and the intermediate part (2),
- or being perpendicular to a plane that is both perpendicular to the plane containing the planar contact region between the bead (32) and the intermediate part (2) and perpendicular to the plane containing the planar contact region between the upper part (10) and the lower part (5),
- or being perpendicular to a plane that is both perpendicular to the plane containing the planar contact region between the bead (32) and the intermediate part (2) and perpendicular to the plane containing a seal interposed between the lower part (10) and the upper part (5),
in particular such that the lower part (5) can be connected not only in a first mounting position on the lower part (5) but also on the opposite side at a second mounting position.

8. Drive according to any of the preceding claims,
**characterised in that**
the braking resistor (30) is received in the intermediate part (2) and is connected to the intermediate part (2) in a heat-conducting manner.

9. Drive according to claim 8,
**characterised in that**
the braking resistor (30) is arranged on the inside of that region of the wall of the intermediate part (2) that is abutted on the outside by the bead (32), and is connected to the intermediate part (2) in a heat-conducting manner, in particular in order to connect the lower part (5) to the intermediate part (2) in a heat-conducting manner.

10. Drive according to claim 9,
**characterised in that**
the threaded bores receiving the screw parts (6) are arranged inside the region.

11. Drive according to any of the preceding claims,
**characterised in that**
the screw parts (6), the intermediate part (2), the lower part (5) and the upper part (10) are made of metal, and so a first heat transfer path leads from the braking resistor (30) via the intermediate part (2) and the screw parts (6) to the lower part (5) and then to the upper part (10), and a second heat transfer path leads from the braking resistor (30) via the intermediate part (2) to the bead (32) of the lower part (5) and then from the lower part (5) to the upper part (10).

12. Drive according to any of the preceding claims,
**characterised in that**
a further seal is arranged between the upper part (10) and the lower part (5) and is radially enclosed by a region projecting from the upper part (10),
wherein the projecting region directly abuts and contacts the lower part (5),
in particular wherein the upper part (10) is connected to the lower part (5) by means of connection screws such that the projecting region of the upper part (10) is pressed against the lower part (5).

13. Drive according to any of the preceding claims,
**characterised in that**
the contact region between the lower part (5) and the upper part (10), in particular the contact region between the lower part (5) and the region projecting from the upper part (10), is planar, and the normal of the plane comprising the contact region in relation to the bore axis of each threaded bore is at an angle of between 20° and 70°.

14. Drive according to any of the preceding claims,
**characterised in that**
the lower part (5) is produced as a cast part using two stamp parts that are moved relatively away from one another in a pulling direction,
wherein the pulling direction is oriented in parallel with the normal of the plane comprising the contact region, in particular between the lower part (5) and the upper part (10),
in particular wherein a first of the two stamp parts ejects a first region of the cut-out (31) composed of two circular overlapping holes and a second of the two stamp parts ejects a second region of the cut-out (31) composed of two circular overlapping holes.

## Revendications

1. Entraînement, comprenant un moteur électrique (1), un convertisseur (3) et une partie intermédiaire (2) agencée entre le moteur électrique (1) et le convertisseur (3) et dans laquelle sont agencés des éléments de raccordement,
une partie inférieure (5) étant reliée de manière thermoconductrice à la partie intermédiaire (2),
une partie supérieure (10) espacée par rapport à la partie intermédiaire (2) étant reliée de manière thermoconductrice à la partie inférieure (5),
la partie supérieure (10) présentant des ailettes de refroidissement (9),
**caractérisé en ce que**
un sectionneur (7) est agencé dans la partie inférieure (5), la partie intermédiaire (2) présente des alésages filetés traversants, en particulier traversant une paroi de la partie intermédiaire (2),
dans lesquels sont vissées des parties filetées (6) qui, en particulier grâce à leurs régions élargies, poussent la partie inférieure (5) vers la partie intermédiaire (2), la partie filetée (6) respective traversant un évidement (31) respectif de la partie inférieure (5), en particulier un évidement (31) traversant une paroi de la partie inférieure (5),
l'évidement (31) étant constitué de respectivement deux trous circulaires se chevauchant, de sorte que la partie filetée (6), dans une première position de montage de la partie inférieure (5) au niveau de la partie intermédiaire (2), traverse un premier des deux trous se chevauchant et, dans l'autre position de montage, traverse l'autre des deux trous se chevauchant,
et la partie filetée (6) respective, en particulier chaque partie filetée (6), présente un trou traversant de manière centrale la partie filetée (6) respective, en particulier en direction de l'axe d'alésage de l'alésage fileté, et permettant le passage d'un câble depuis l'espace intérieur de la partie inférieure (5) jusqu'à l'espace intérieur entouré par la partie intermédiaire (2).

2. Entraînement selon la revendication 1,
**caractérisé en ce que**
le moteur électrique (1) est espacé par rapport au convertisseur (3),
la partie intermédiaire (2) étant reliée à la fois au moteur électrique (1), en particulier à l'enveloppe de stator du moteur électrique (1), et au convertisseur (3), en particulier à l'enveloppe du convertisseur (3).

3. Entraînement selon l'une quelconque des revendications précédentes,
**caractérisé en ce que**
les alésages filetés de la partie inférieure (5) sont recouverts en commun avec la partie supérieure (10).

4. Entraînement selon l'une quelconque des revendications précédentes,
**caractérisé en ce que**
au niveau de la partie inférieure (5) est formé un bourrelet (32),
en particulier en contact avec la partie intermédiaire (2) et/ou entourant les bouches des alésages filetés tournées vers la partie inférieure (5).

5. Entraînement selon l'une quelconque des revendications précédentes,
**caractérisé en ce que**
la partie inférieure (5) est espacée par rapport au convertisseur (3),
la partie inférieure (5) étant espacée par rapport au moteur électrique (1),
la partie supérieure (10) étant espacée par rapport au convertisseur (3),
la partie supérieure (10) étant espacée par rapport au moteur électrique (1),

6. Entraînement selon l'une quelconque des revendications précédentes,
**caractérisé en ce que**
entre la partie intermédiaire (2) et la partie inférieure (5) est agencé un joint, en particulier un joint plat (4), qui est agencé radialement à l'extérieur du bourrelet (32) par rapport à l'axe d'alésage de l'un des alésages filetés et/ou est réalisé de manière à entourer le bourrelet (32),
en particulier la déformation élastique du joint étant limitée au moyen du bourrelet (32) appliqué contre la partie intermédiaire (2).

7. Entraînement selon l'une quelconque des revendications précédentes,
**caractérisé en ce que**
la paroi de la partie intermédiaire (2) présente des alésages filetés traversants non seulement du côté tourné vers la partie inférieure (5), mais également à l'opposé, en particulier avec une symétrie de miroir par rapport au plan contenant l'axe de rotation du rotor,
- qui est orienté parallèlement au plan contenant la région de contact nouvellement formée entre le bourrelet (32) et la partie intermédiaire (2)
- ou qui est perpendiculaire à un plan qui est perpendiculaire au plan contenant la région de contact nouvellement formée entre le bourrelet (32) et la partie intermédiaire (2) et qui est perpendiculaire au plan contenant la région de contact nouvellement formée entre la partie supérieure (10) et la partie inférieure (5),
- ou qui est perpendiculaire à un plan qui est perpendiculaire au plan contenant la région de contact nouvellement formée entre le bourrelet (32) et la partie intermédiaire (2) et qui est perpendiculaire au plan contenant un joint intercalé entre la partie inférieure (5) et la partie supérieure (10),
en particulier de sorte que la partie inférieure (5) peut être reliée non seulement à la partie inférieure (5) dans une première position de montage, mais également de manière opposée au niveau d'une deuxième position de montage.

8. Entraînement selon l'une quelconque des revendications précédentes,
**caractérisé en ce que**
une résistance de freinage (30) est logée dans la partie intermédiaire (2) et est reliée de manière thermoconductrice à la partie intermédiaire (2).

9. Entraînement selon la revendication 8,
**caractérisé en ce que**
la résistance de freinage (30) est agencée du côté intérieur de ladite région de la paroi de la partie intermédiaire (2) et est reliée de manière thermoconductrice à la partie intermédiaire (2) contre le côté extérieur duquel repose le bourrelet (32), en particulier en vue d'une liaison thermoconductrice de la partie inférieure (5) avec la partie intermédiaire (2).

10. Entraînement selon la revendication 9,
**caractérisé en ce que**
les alésages filetés accueillant les pièces filetées (6) sont agencés à l'intérieur de ladite région.

11. Entraînement selon l'une quelconque des revendications précédentes, **caractérisé en ce que**
les pièces filetées (6), la partie intermédiaire (2), la partie inférieure (5) et la partie supérieure (10) sont fabriquées en métal et créent ainsi un premier chemin de conduction thermique allant de la résistance de freinage (30) jusqu'à la partie inférieure (5) en passant par la partie intermédiaire (2) et les pièces filetées (6), puis jusqu'à la partie supérieure (10), et créent un deuxième chemin de conduction thermique allant de la résistance de freinage (30) jusqu'au bourrelet (32) de la partie inférieure (5) en passant par la partie intermédiaire (2), puis de la partie inférieure (5) jusqu'à la partie supérieure (10) .

12. Entraînement selon l'une quelconque des revendications précédentes,
**caractérisé en ce que**
entre la partie supérieure (10) et la partie inférieure (5) est agencé un autre joint qui est entouré radialement par une région en saillie au niveau de la partie supérieure (10), la région en saillie reposant directement sur la partie inférieure (5) et étant en contact avec celle-ci,
la partie supérieure (10) étant en particulier reliée à la partie inférieure (5) au moyen de vis de liaison, de sorte que la région en saillie de la partie supérieure (10) est pressée contre la partie inférieure (5).

13. Entraînement selon l'une quelconque des revendications précédentes,
**caractérisé en ce que**
la région de contact entre la partie inférieure (5) et la partie supérieure (10), en particulier la région de contact entre la partie inférieure (5) et la région en saillie au niveau de la partie supérieure (10), est réalisée de manière plane et la normale du plan comprenant la région de contact présente un angle compris entre 20° et 70° par rapport à l'axe d'alésage de l'alésage fileté respectif.

14. Entraînement selon l'une quelconque des revendications précédentes,
**caractérisé en ce que**
la partie inférieure (5) est fabriquée sous la forme d'une pièce moulée avec deux pièces embouties éloignées l'une de l'autre dans une direction de traction,
la direction de traction étant orientée parallèlement à des normales du plan comprenant la région de contact, en particulier entre la partie inférieure (5) et la partie supérieure (10),
en particulier une première des deux pièces embouties fournissant par démoulage une première région de l'évidement (31) constitué de deux trous circulaires se chevauchant et une deuxième des deux pièces embouties fournissant par démoulage une deuxième région de l'évidement (31) constitué de deux trous circulaires se chevauchant.
